# EUROPÄISCHE PATENTSCHRIFT

(11) **EP 0 518 043 B1**
(45) Veröffentlichungstag und Bekanntmachung des Hinweises auf die Patenterteilung: **02.11.1995**
(21) Anmeldenummer: 92107358.1
(22) Anmeldetag: 30.04.1992
(51) Int. Cl.: B26D 1/00

(54) **Schneidvorrichtung für einen aus Kautschukmischungen geformten Profilstreifen**
Apparatus for cutting profiled rubber strips
Dispositif pour la coupe de bandes profilées en caoutchouc

(30) Priorität: 24.05.1991 DE 4116971
(43) Veröffentlichungstag der Anmeldung: 16.12.1992
(73) Patentinhaber: PAUL TROESTER MASCHINENFABRIK, D-30519 Hannover (DE)
(72) Erfinder: Pohl, Hans-Joachim, Dipl-Ing., W-3000 Hannover 1 (DE)
(74) Vertreter: Junius, Walther, Dr.

(56) Entgegenhaltungen:
- DE-A- 1 806 747
- DE-B- 1 186 209
- GB-A- 441 648
- US-A- 2 544 241
- US-A- 2 550 191
- US-A- 3 072 004
- US-A- 4 860 620

## Beschreibung

Die Erfindung betrifft eine Schneidvorrichtung nach dem Oberbegriff des Anspruchs 1.

Bei der Fertigung von ein- und mehrschichtigen Kautschukstreifen für die Herstellung von Reifen, z.B. Protektoren oder Reifenseitenwandprofilen, müssen sowohl hohe Schnittgüte als auch hohe Schnitthäufigkeit pro Zeiteinheit erreicht werden, um den Produktionsanforderungen bei der Reifenherstellung zu entsprechen. Die Schnittgüte ist insbesondere bei Radialreifen effektiv unverzichtbar, die Schnitthäufigkeit ist erforderlich, um wirtschaftlich produzieren zu können.

Schneidvorrichtungen nach dem Stande der Technik verwenden fast ausnahmslos schnellrotierende Kreismesser, welche beim Schnitt mit Dampf oder mit einem Flüssigkeitsnebel geschmiert werden müssen. Es gibt Ausführungsformen, bei denen die Kreismesser direkt auf der Welle des, Antriebsmotors befestigt sind, welcher dann beim Schnitt nebst Messer und Schutzvorrichtung quer zur Profillaufrichtung bewegt wird (US-A-3 072 004). Um den Schnitt an einem in Bewegung befindlichen Profilstreifen ausführen zu können, besaßen solche Schneidemaschinen Wagen, welche durch Ankupplung an die Transportvorrichtung während des Schneidvorganges synchron mit dem zu schneidenden Kautschukprofilstreifen mitbewegt wurden. Mit höher, werdenden Produktionsgeschwindigkeiten waren diese Schneidvorrichtungen aber bald nicht mehr einsetzbar, weil der Rücktransport des Wagens mit der Schneidvorrichtung sich in den kurzen Schneidpausen nicht mehr bewerkstelligen ließ.

Die weitere Entwicklung der Schneidvorrichtungen ging dahin, daß die zu schneidenden Kautschukstreifen für den Schneidvorgang kurzzeitig angehalten wurden, was entsprechende Brems- und Beschleunigungs-Vorgänge an den Transportelementen erforderte und zunächst große Genauigkeitsprobleme aufwarf, die aber dann doch beherrscht werden konnten. Es zeigte sich hier aber die Grenze der Leistungsfähigkeit an der Querbewegung des rotierenden Schneidmessers, weil auch dort durch die relativ große Masse insbesondere des Messermotors die Bewegungsgeschwindigkeit nicht so hoch getrieben werden konnte, wie es von der Leistungsfähigkeit, insbesondere der geforderten Schnitthäufigkeit, der Extrusionsanlagen her gesehen erwünscht war. Aber nicht nur die Masse des Antriebsmotors für das Messer setzten einer Steigerung der Produktionsgeschwindigkeit Grenzen, sondern auch die als Vorschubmechanismus zumeist verwendeten Gewindespindeln (US-A-25 44 241), die über Bremsmotoren angetrieben wurden und welche wegen der häufigen Anlaufund Bremsvorgänge einem starken Verschleiß unterlagen. Die Anlauf- und Bremsvorgänge der Quervorschubeinrichtung übten starke Stöße aus, welche die gesamte Schneidemaschine in Mitleidenschaft zogen und nicht tragbar waren.

Man hat versucht, die Schnitte in beiden Quervorschubrichtungen auszuführen, indem man wechselnd einmal von links nach rechts, das nächste Mal von rechts nach links den Schnitt ausführte. Es ergaben sich aber hierbei ungleiche Schnittbilder, die zu Problemen beim Konfektionieren der Reifen führten. Daher ist es notwendig, beim Messerrücklauf das Messer mitsamt Messerhalterung über den zu schneidenden Profilstreifen nach dem Ende eines Schnittes anzuheben, dann über den Profilstreifen hinweg zurückzubefördern und dann für die Ausführung des nächsten Schnittes wieder abzusenken, wie dieses z.B. in der DE-PS 11 86 209 beschrieben ist.

Die durch diese Druckschrift bekannt gewordene Schneidvorrichtung weist als Quervorschubvorrichtung einen auf Führungsschienen verschiebbaren Wagen auf, der von einer um zwei Umlenkräder geführten Kette ständig hin- und hergeschoben wird und der einen Schlitten mit den Lagern für die Messerwelle trägt. Die Bewegung des Schlittens ist von einer Schwinge abgeleitet, die an der Kette und am Wagen angelenkt ist und die Kettenbewegung auf den Wagen überträgt. Wegen der ungenauen Schlittenhöheneinstellung sind zusätzlich Stiftarretierungen vorgesehen. Der Antriebsmotor ist mit der Messerwelle über eine biegsame Welle verbunden. Ein exakter Schnitt ist mit dieser Vorrichtung nicht möglich, die auftretenden Ungleichmäßigkeiten liegen zwar an etwa gleichen Stellen und gleichen sich daher weitgehend aus, das reicht aber nicht für moderne Anforderungen an die Reifenqualität.

Die Verwendung von pneumatischen Vorschubzylindern anstelle von Gewindespindeln führe zu einer fast verschleißfreien Arbeitsweise, brachte aber trotzdem nicht den gewünschten Erfolg, da aufgrund der kurzen Zeit für den gesamten Arbeitsvorgang die Stöße beim Beschleunigen und Abbremsen nicht sanft genug gedämpft werden konnten. Diese pneumatischen Quertransportvorrichtungen hatten überdies den Nachteil, daß sie nicht auf eine gleichmäßige Quervorschubgeschwindigkeit während des Schnittes gebracht werden konnten, da im Moment des Schneidens die Vorschubgeschwindigkeit widerstandsabhängig vermindert wurde, was zu unsauberen Schnitten führte. Hydraulische Antriebe für den Messervorschub verbieten sich nicht nur aus Kostengründen, sondern auch wegen der harten Stöße, die bei hydraulischen Anlagen bei schnellen Beschleunigungen und Abbremsungen auftreten.

Die vorliegende Erfindung vermeidet die Nachteile des Standes der Technik. Es ist die Aufgabe der Erfindung, in einfacher Weise die Arbeitsgeschwindigkeit der Schneidvorrichtung beim Erzielen präziser Schnitte zu vergrößern.

Diese Aufgabe wird erfindungsgemäß durch eine Schneidvorrichtung mit den Merkmalen des Anspruchs 1 gelöst.

Mit dieser Vorrichtung werden exakt ebene Schnitte ohne Ungleichmäßigkeiten erzielt. Das liegt einerseits daran, daß das Messer ohne Drehgeschwindigkeitsverlust in den zu schneidenden Streifen eintaucht und mit gleichbleibender Dreh- und Schnittgeschwindigkeit den Streifen durchtrennt und daß andererseits die feste Lagerung der Messerwelle auf dem Getriebekasten jegliches Ausweichen der Messerwelle insbesondere beim Einsetzen des Schnittes verhindert. Dabei wird der schwere Antriebsmotor für das Messer nicht mit der Messerwelle mitbewegt, so daß in den Umkehrpunkten des Quervorschubes des Messers nur relativ geringe Massen zuerst abgebremst und anschließend wieder beschleunigt werden müssen. Die Verwendung einer z.B. teleskopierbaren Gelenkwelle erbringt die notwendige drehfeste Verbindung zwischen Antriebsmotor und Messer, die notwendig ist, um bei Beginn des Schnittes die Rotationsgeschwindigkeit des Messers konstant zu halten. Aber auch die Auswahl eines Rollringgetriebes im Antrieb, wie es an sich z.B. aus der DE-A-18 06 747 bekannt ist, führt zu einer Verringerung der zu bewegenden Massen: Wird doch beim Rollringgetriebe lediglich der die drei Wälzlager aufnehmende Getriebekasten bewegt, an dem sich leicht die Lagerung für die Messerwelle anbringen läßt. Somit sind die vom Quertransport zu transportierenden Massen so gering gehalten, daß das Abbremsen und das Wiederbeschleunigen der vom Quertransport zu bewegenden Massen nur sehr kurze Zeit in Anspruch nimmt. Hierdurch kommt man zu hohen Schnittfrequenzen.

Dabei ist es zweckmäßig, wenn Umschaltkulissen für das Rollringgetriebe auf bestimmte vorgebbare Stellen einstellbar an einer die Halterungbildenden Wippe befestigt sind.

Diese Schneidvorrichtung läßt sich bevorzugt in zwei Ausführungsformen herstellen:
Die eine Ausführungsform zeichnet sich dadurch aus, daß die Bewegungsvorrichtung und der Motor auf einer um eine horizontale Achse verschwenkbaren Wippe angeordnet sind. Bei dieser verschwenkbaren Wippe ist die Achse möglichst so gelegt, daß sie durch den Schwerpunkt der Wippe hindurchgeht. Auf diese Weise kann der schwere Antriebsmotor für das rotierende Messer mit auf der verschwenkbaren Wippe untergebracht werden, ohne daß seine Masse die für die Beschleunigung und Abbremsung der Wippe notwendigen Zeiten von der Masse des Motors beeinflußt werden.

Konstruktiv sehr einfach wird diese Lösung dann, wenn die Messerwelle, die Gelenkwelle und die Welle des Motors in einer gemeinsamen Ebene liegen. Gleichzeitig wird hierdurch der sowieso kaum auftretende Verschleiß noch geringer.

Die andere bevorzugte Ausführungsform der Schneidvorrichtung besteht darin, daß die Messerwelle, ihre Lagerung und die Querbewegungsvorrichtung auf einem gemeinsamen Träger angeordnet sind, mit dem das Messer parallel zu sich selbst aus seinem Schnittbereich des zu schneidenden Streifens verschiebbar ist. Bei dieser Ausführungsform Wird der schwere Antriebsmotor für das Messer fest am Maschinengestell befestigt, während die Quertransportvorrichtung mit ihrem Motor und der Lagerung für die Messerwelle auf einem Wagen oder einem Schlitten aufgebaut werden, welcher auf den Führungsschienen läuft oder verschoben wird. Der Verschiebung dienen auch hier bevorzugt pneumatische Zylinder.

Dabei kann es zweckmäßig sein, wenn der Träger in einer Ebene parallel zum Messer oder quer zur Messerwelle aus dem Schnittbereich des zu schneidenden Streifens verschiebbar ist.

Eine andere Möglichkeit besteht darin, daß die Führungsschiene vertikal angeordnet ist.

Bei dieser Art von Ausführungsformen ist es zweckmäßig, wenn Umschaltkulissen für das Rollringgetriebe auf bestimmte vorgebbare Stellen einstellbar am Träger angeordnet sind.

Anstelle der Führungsschienen können auch in einem Parallelogramm angeordnete Lenker für die Bewegung des Trägers dienen.

Die Erfindung ist nachstehend anhand eines in der Zeichnung schematisch dargestellten Ausführungsbeispiels näher erläutert. Es zeigen:

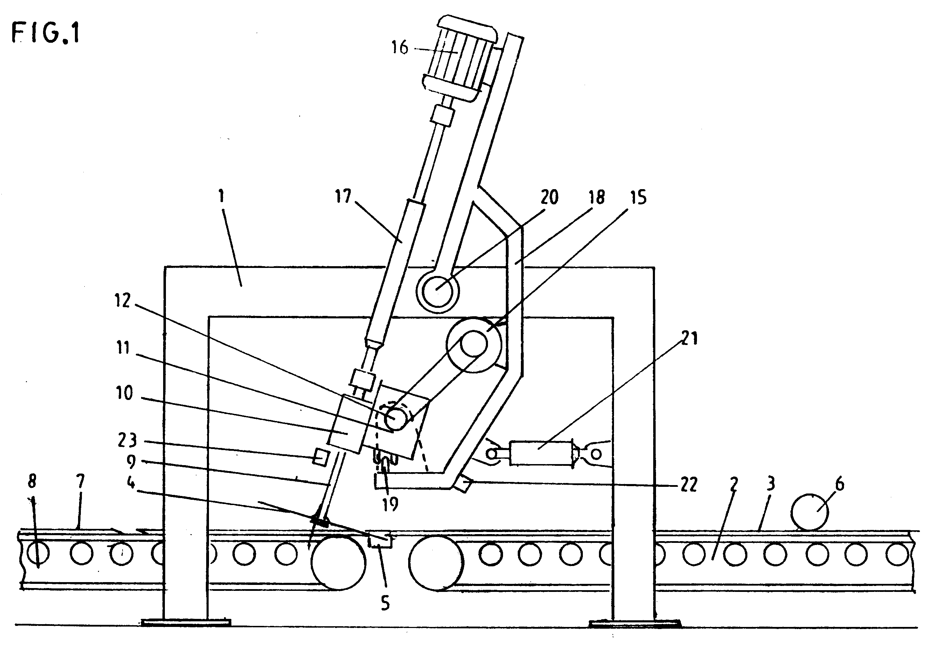

- Fig. 1: eine Seitenansicht der Schneidvorrichtung während des Schnittes,

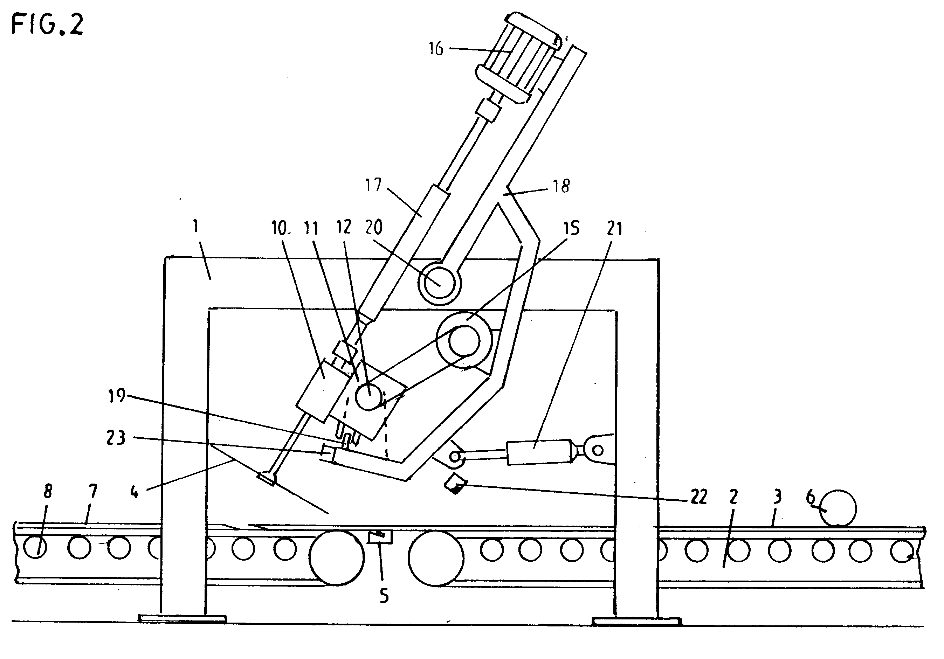

- Fig. 2: die Vorrichtung während des Rücklaufes,

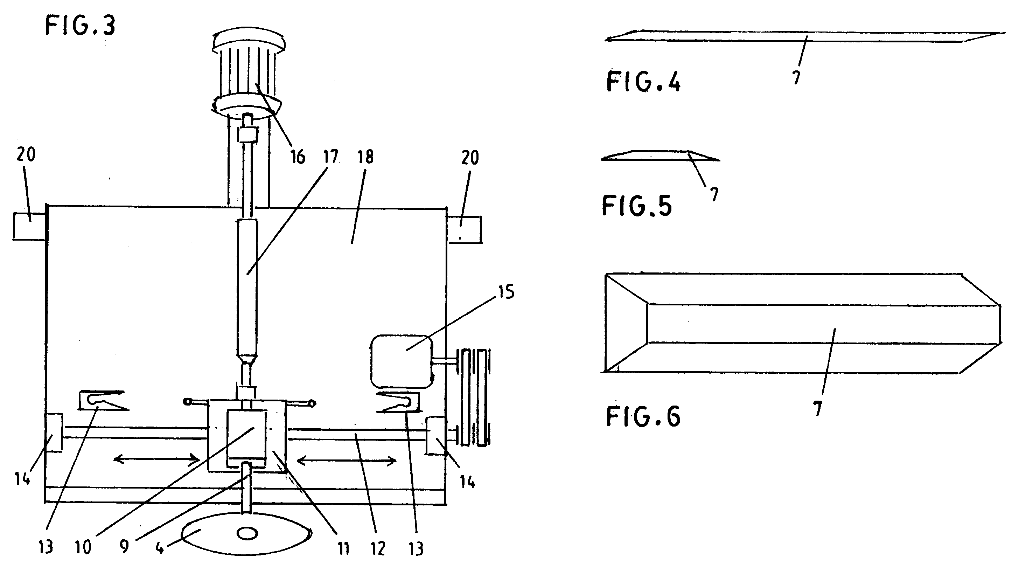

- Fig. 3: eine Frontansicht der Vorrichtung,
- Fig. 4: eine Seitenansicht eines geschnittenen Streifens,
- Fig. 5: eine Frontansicht eines geschnittenen Streifens,
- Fig. 6: eine Ansicht von oben auf einen geschnittenen Streifen,

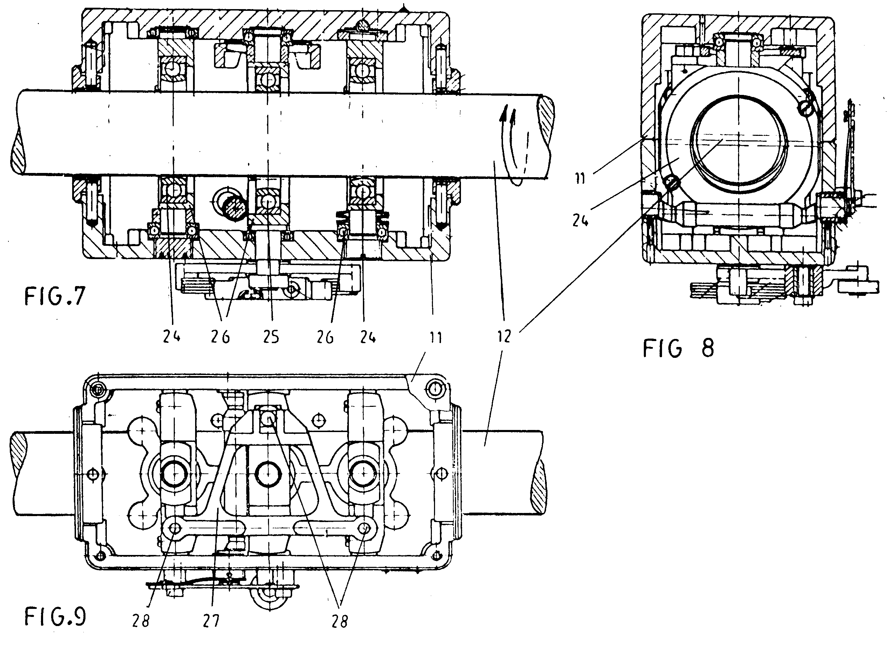

- Fig. 7: einen Schnitt durch das Rollringgetriebe,
- Fig. 8: eine Seitenansicht des Rollringgetriebes,
- Fig. 9: eine Ansicht von oben auf das Rollringgetriebe.
- Fig. 10: eine Seitenansicht einer Schneidvorrichtung mit einem beweglichen Träger für die Quervorschubvorrichtung, welcher als Wagen ausgebildet auf schräg im Maschinengestell angeordneten Führungsschienen verschiebbar ist,
- Fig. 11: eine Seitenansicht einer Schneidvorrichtung, deren Träger für die Quervorschubvorrichtung auf vertikalen Führungsschienen verschiebbar ist,
- Fig. 12: eine Seitenansicht einer Schneidvorrichtung, deren Träger für die Quervorschubvorrichtung durch im Parallelogramm angeordnete Lenker in der Höhenlage verstellbar ist.

Die Schneidvorrichtung weist ein Maschinengestell 1 auf, in welches ein Förderband 2 den extrudierten oder kalandrierten aus einer nicht dargestellten Kühl-/Förderanlage kommenden auf bestimmte Längen zu schneidenden Profilstreifen 3 fördert. Der Schnitt wird mit einem rotierenden Messer 4 ausgeführt, welches in eine Nut einer als Schneidgegenlager dienenden Leiste 5 eingreift. Der zugeführte Profilstreifen 3 wird für den Schnitt durch das Abstoppen des Förderbandes 2 und das Abstoppen einer Andrückwalze 6 für den Schnitt angehalten. Das abgeschnittene Profilbandstück 7 wird von dem Förderband 8 abtransportiert.

Das Messer 4 ist auf der Messerwelle 9 befestigt, welche in dem Lagergehäuse 10 gelagert ist, welches an dem Getriebegehäuse 11 fest angebracht ist. Dieses Getriebegehäuse 11 ist auf der Antriebswelle 12 frei hin und her verschiebbar. Umsteuerkulissen 13 bestimmen die Endpunkte der Bewegung des Getriebegehäuses 11 auf der Antriebswelle 12. Diese Antriebswelle ist in Lagern 14 gelagert und durch einen Motor 15 angetrieben.

Der Antrieb des rotierenden Messers 4 erfolgt von einem Motor 16 über eine Gelenkwelle 17, welche teleskopierbar ausgebildet ist. Alle diese Bauteile werden von der Wippe 18 getragen. Die Motoren 15 und 16 sind fest auf der Wippe 18 angebracht, ebenso die Lager 14 für die Antriebswelle 12. Weiter ist eine Führungsschiene 19 fest auf der Wippe 18 angebracht. Längs dieser Führungsschiene 19 ist das Getriebegehäuse 11 verschiebbar, die Führungsschiene 19 dient dazu, das Getriebegehäuse 11 unverdreht hin und her zu verschieben. Fest, aber einstellbar auf bestimmte Abstände voneinander sind die Umsteuerkulissen 13 auf der Wippe 18 angebracht. Sie bestimmen die Weglänge, welche das Getriebegehäuse 11 zurücklegt. Bei dem Schneiden von breiten Protektorstreifen sind diese Umsteuerkulissen 13 weiter auseinander festgesetzt als bei dem Schneiden von schmalen Seitenwandstreifen. Die Wippe 18 ist um die Achse 20 verschwenkbar. Sie wird zwischen einer Schneidstellung und einer Rückführstellung mittels des pneumatischen Servoantriebs 21 bewegt und in den Endstellungen durch Anschläge 22, 23 gehalten, wobei der Anschlag 22 die Schneidstellung, der Anschlag 23 die Rückhubstellung bestimmt.

Das Getriebegehäuse 11 ist von der Antriebswelle 12 durchsetzt. Im Inneren des Getriebegehäuses 11 befinden sich drei exentrisch zur Achse der Antriebswelle 12 angeordnete Kugellager 24, 25 mit balligem Innenring, der einen größeren Innendurchmesser als den Außendurchmesser der Antriebswelle aufweist und unter dem Druck von Tellerfedern an die Antriebswelle 12 angepreßt ist. Die Kugellager 24, 25 sind in schwenkbaren Halterungen 26 gelagert. Je nach dem eingestellten Verschwenkwinkel in Abhängigkeit von der Drehzahl der Antriebswelle 12 wird eine seitliche Kraftkomponente auf das Getriebegehäuse 11 relativ zur Welle 12 ausgeübt, welche die Bewegung einleitet und präzise durchführt. Der Verschwenkwinkel wird für die drei Kugellager 24, 25 mittels einer gemeinsamen Einstellplatte 27 eingestellt, welche Öffnungen für an den Halterungen 26 angebrachte Zapfen 28 aufweist. Die Lage dieser Einstellplatte 27 wird durch die Umsteuerkulissen 13 eingestellt, welche die Einstellplatte 27 in ihre zwei Endstellungen hineinstößt.

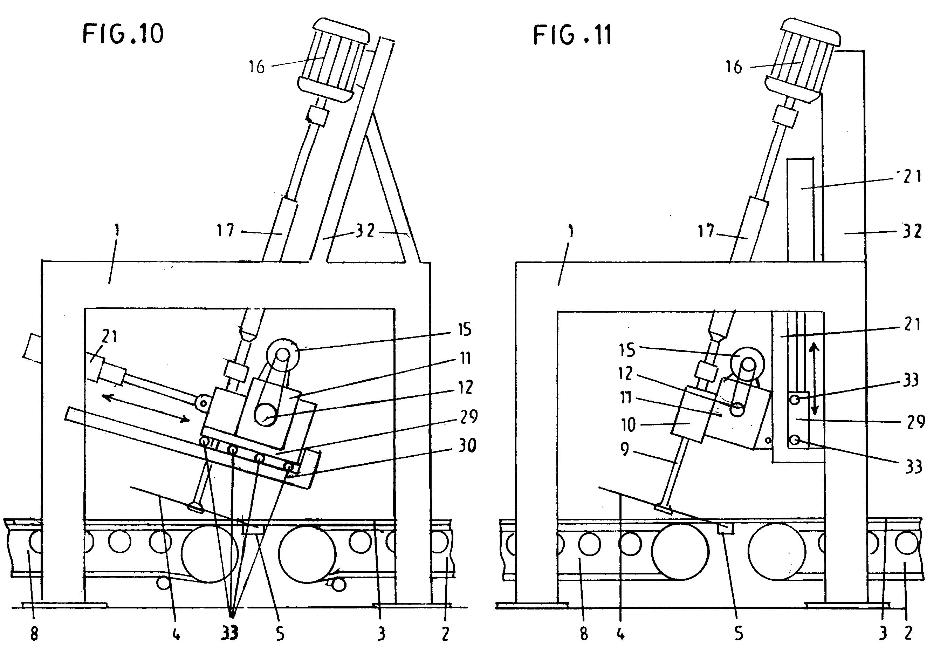

Im Ausführungsbeispiel der Fig. 10 ist der Antriebsmotor 16 für die Messerwelle 9 fest an der Halterung 32 auf dem Maschinengestell 1 aufgebaut. Die Quervorschubvorrichtung in Form des Rollringgetriebes mit dem Getriebegehäuse 11, der Antriebswelle 12 und dem Motor 15 sind auf dem Träger 29 aufgebaut, welcher als Wagen ausgebildet ist und mit Rädern 33 auf Führungsschienen 30 in der durch einen Doppelpfeil angedeuteten Richtung mit Hilfe des Servomotors 21, der durch eine pneumatische Kolben-Zylinder-Einheit gebildet ist, verschiebbar ist. In den Umkehrpunkten der Querbewegung, in denen das Messer außerhalb des zu schneidenden Streifens kurzzeitig verharrt, wird die Verschiebung des Wagens 29 mit Hilfe des Servomotors 21 vorgenommen.

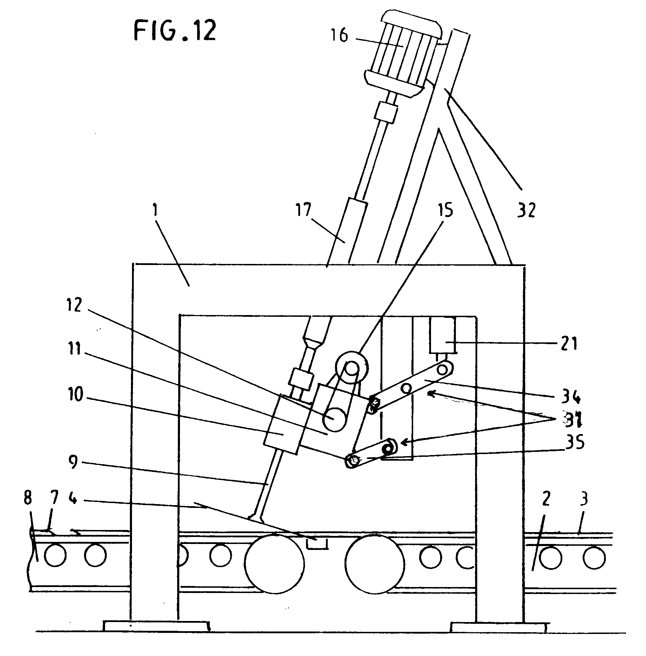

Im Ausführungsbeispiel der Fig. 11 ist der Träger 29 durch einen Schlitten gebildet, welcher sich über Räder 33 an der vertikal angeordneten Führungsschiene 30 abstützt und mittels des Servomotors 21 bewegt wird, um für die Rückbewegung des Messers 4 in der oberen Stellung hochgezogen, den Rückhub ausführen zu können, ohne den zu schneidenden Streifen 3 zu berühren. Auch hier sind an dem als Träger 29 dienenden Schlitten die Teile der Querbewegungsvorrichtung 10,11,12 angebaut. Das Lagergehäuse 10 für die Messerwelle 9 ist fest an das Getriebegehäuse 11 der Quervorschubvorrichtung angebaut.

Im Ausführungsbeispiel der Fig. 12 sind Lenker 34, 35 für das Tragen der Quervorschubvorrichtung 10,11,12 vorgesehen, wobei der obere Lenker 34 ein Doppelarmlenker ist, an dessen einem Arm der Servomotor 21 angreift.

### Liste der Bezugszeichen:

- 1: Maschinengestell
- 2: Förderband
- 3: Profilstreifen
- 4: rotierendes Messer
- 5: Leiste
- 6: Andrückwalze
- 7: Profilbandstück
- 8: Förderband
- 9: Messerwelle
- 10: Lagergehäuse
- 11: Getriebegehäuse
- 12: Antriebswelle
- 13: Umsteuerkulisse
- 14: Lager
- 15: Motor
- 16: Motor
- 17: Gelenkwelle
- 18: Wippe
- 19: Führungsschiene
- 20: Achse
- 21: Servomotor
- 22: Anschlag
- 23: Anschlag
- 24: Kugellager
- 25: Kugellager
- 26: Halterung
- 27: Einstellplatte
- 28: Zapfen
- 29: Träger
- 30: Führungsschiene
- 31: Lenker
- 32: Halterung
- 33: Rad
- 34: Doppelarmlenker
- 35: Lenker

## Patentansprüche

1. Schneidvorrichtung zum Schneiden eines durch Extrusion und/oder Kalandrierung von Kautschukmischungen geformten Profilstreifens (3), dessen Transportstrecke (2) für eine für den Schneidvorgang unterbrochene Bewegung ausgelegt ist,
bestehend aus einem von einem Motor (16) unter Zwischenschaltung einer flexiblen Welle (17) angetriebenen, auf einer Messerwelle (9) befestigten kreisscheibenförmigen Messer (4), und einer Querbewegungsvorrichtung (11,12), die das Messer (4) zwischen zwei vorgebbaren Endstellungen hin und her bewegt, wobei die Messerwelle (9) und ihre Lagerung auf einer gemeinsamen Halterung (18,29) angeordnet sind, die zur Bewegung des Messers (4) zwischen einer Schneidstellung und einer Rückführstellung in der sich das Messer (4) außerhalb der Bewegungsbahn des Profilstreifens (3) befindet, verschieb- und/oder verschwenkbar ist, so daß das Messer (4) während des Rückhubes auf einer höher gelegenen Bahn als während des Schneidhubes quer durch die Querbewegungsvorrichtung (11,12) bewegbar ist,
dadurch gekennzeichnet,
daß die Querbewegungsvorrichtung (11,12) auf der Halterung (18,29) angeordnet und die Halterung (18, 29) um eine fest mit dem Maschinengestell (1) verbundene Welle (20) verschwenkbar und/oder entlang einer fest am Maschinengestell (1) angeordneten Führung verschiebbar ist,
daß die Querbewegungsvorrichtung (11,12) ein Rol lringgetriebe ist, dessen Antriebswelle (12) in zwei auf der Halterung (18,29) befestigten Lagern (14) drehbar, aber unverschiebbar gelagert ist,
daß die Messerwelle (9) in oder an einem fest mit dem Gehäuse (11) des Rollringgetriebes verbundenen Lagergehäuse drehbar, aber unverschiebbar gelagert ist,
und daß zwischen der Messerwelle (9) und der Welle des nicht durch die Querbewegungsvorrichtung (11,12) bewegbaren Motors (16) eine drehfeste Kraftübertragungsvorrichtung (17) angeordnet ist, die die während des Betriebs auftretenden durch die Bewegung der Querbewegungsvorrichtung (11,12) hervorgerufenen relativen Bewegungen zwischen der Messerwelle (9) und der Welle des Motors (16) zuläßt.

2. Schneidvorrichtung nach Anspruch 1,
dadurch gekennzeichnet,
daß die Querbewegungsvorrichtung (11, 12) und der Motor (16) auf der Halterung (18), die als eine um eine horizontale Achse (20) verschwenkbaren Wippe ausgeführt ist, angeordnet sind.

3. Schneidvorrichtung nach Anspruch 2,
dadurch gekennzeichnet,
daß Umschaltkulissen (13) für das Rollringgetriebe (11, 12) auf bestimmte vorgebbare Stellen einstellbar an der Wippe (18) befestigt sind.

4. Schneidvorrichtung nach Anspruch 1,
dadurch gekennzeichnet,
daß die Messerwelle (9), die in ihrer Länge veränderbare Gelenkwelle (17) und die Weile des Motors (16) in einer gemeinsamen Ebene liegen.

5. Schneidvorrichtung nach Anspruch 1,
dadurch gekennzeichnet,
daß die Messerwelle (9), ihre Lagerung (10) und die Querbewegungsvorrichtung (11, 12) auf einer als ein gemeinsamer Träger (29) ausgebildeten Halterung angeordnet sind, mit dem das Messer (4) parallel zu sich selbst aus seinem Schnittbereich des zu schneidenden Streifens (3) verschiebbar is

6. Schneidvorrichtung nach Anspruch 5,
dadurch gekennzeichnet,
daß der Träger (29) in einer Ebene parallel zum Messer (4) oder quer zur Messerwelle (9) aus dem Schnittbereich des zu schneidenden Streifens (3) verschiebbar ist.

7. Schneidvorrichtung nach Anspruch 5,
dadurch gekennzeichnet,
daß Umschaltkulissen (13) für das Rollringgetriebe (11, 12) auf bestimmte vorgebbare Stellen einstellbar am Träger (29) angeordnet sind.

8. Schneidvorrichtung nach Anspruch 5,
gekennzeichnet durch
im Gestell befestigte Führungsschienen (30) für den verschiebbaren Träger (29).

9. Schneidvorrichtung nach Anspruch 5,
gekennzeichnet durch
in einem Parallelogramm angeordnete Lenker (31), deren eines Ende am Gestell (1), deren anderes Ende am Träger (29) angelenkt ist.

## Claims

1. Cutting device for cutting a profiled strip (3) formed by extrusion and/or calendering of rubber mixtures, the conveying line (2) of which is designed for a movement interrupted for the cutting operation, consisting of a circular disc-shaped cutter (4) which is mounted on a cutter shaft (9) and driven by a motor (16) through a flexible shaft (17), and a transverse movement device (11, 12) which moves the cutter (4) to and fro between two predefinable end positions, the cutter shaft (9) and its bearings being disposed on a common mounting (18, 29) which is displaceable ad/or pivotable for movement of the cutter (4) between a cutting position and a retracted position in which the cutter (4) is located outside the path of movement of the profiled strip (3), so that the cutter (4) is movable transversely by the transverse movement device (11, 12) during the backstroke on a higher path than during the cutting stroke, characterised in that the transverse movement device (11, 12) is disposed on the mounting (18, 29) and the mounting (18, 29) is pivotable about a shaft (20) fixed to the machine frame (1) and/or displaceable along a guide fixed on the machine frame (1), in that the transverse movement device (11, 12) is a roller cage gear unit the driving shaft (12) of which is mounted pivotably but undisplaceably in two bearings (14) secured on the mounting (18, 29), in that the cutter shaft (9) is mounted pivotably but undisplaceably in or on a bearing housing fixed to the housing (11) of the roller cage gear unit, and in that between the cutter shaft (9) and the shaft of the motor (16) not movable by the transverse movement device (11, 12) there is a torsionally fixed power transmission device (17) which allows the relative movements between the cutter shaft (9) and the shaft of the motor (16) occurring during operation due to the movement of the transverse movement device (11, 12).

2. Cutting device according to claim 1, characterised in that the transverse movement device (11, 12) and the motor (16) are disposed on the mounting (18) which is embodied as a rocker pivotable about a horizontal axis (20).

3. Cutting device according to claim 2, characterised in that reversing slides (13) for the roller cage gear unit (11, 12) are mounted on the rocker (18) so that they can be set to certain predefinable positions.

4. Cutting device according to claim 1, characterised in that the cutter shift (9), the variable length cardan shaft (17) and the shaft Of the motor (16) lie in a common plane.

5. Cutting device according to claim 1, characterised in that the cutter shaft (9), its bearings (10) and the transverse movement device (11, 12) are disposed on a mounting embodied as a common carrier (29), with which the cutter (4) is displaceable parallel with itself out of the cutting area of the strip (3) to be cut.

6. Cutting device according to claim 5, characterised in that the carrier, (29) is displaceable in a plane parallel with the cutter (4) or at right-angles to the cutter shaft (9) out of the cutting area of the strip (3) to be cut.

7. Cutting device according to claim 5, characterised in that reversing slides (13) for the roller cage gear unit (11, 12) are disposed on the carrier (29) so that they can be set to certain predefinable positions.

8. Cutting device according to claim 5, characterised by guide rails (30) secured in the frame for the displaceable carrier (29).

9. Cutting device according to claim 5, characterised by an arm (31) which is disposed in a parallelogram and one end of which is articulated to the frame (1) and the other end of which is articulated to the carrier (29).

## Revendications

1. Dispositif de coupe pour couper une bande profilée (3) formée par extrusion et/ou calandrage de mélanges de caoutchouc, dont le trajet de transport (2) est organisé pour un mouvement interrompu pour l'opération de coupe, constitué par une lame circulaire (4), fixée sur un arbre (9) de lame, entraînée par un moteur (16) avec interposition d'un arbre flexible (17), et un dispositif de déplacement transversal (11, 12) qui déplace la lame (4) alternativement entre deux positions extrêmes pouvant être prédéterminées, l'arbre (9) de lame et son palier étant agencés sur une monture commune (18, 29) qui peut être déplacée en translation et/ou en oscillation pour déplacer la lame (4) entre une position de coupe et une position de retour dans laquelle la lame (4) se trouve en dehors de la trajectoire de la bande profilée (3), de sorte que, pendant la course de retour, la lame (4) peut être mise en mouvement transversal par le dispositif de déplacement transversal (11, 12) sur une trajectoire située plus haut que pendant la course de coupe,
caractérisé
en ce que le dispositif de déplacement transversal (11, 12) est agencé sur la monture (18, 29) et la monture (18, 29) peut être mise en mouvement d'oscillation autour d'un arbre (20) relié rigidement au bâti (1) de la machine et/ou en translation le long d'un guide monté rigidement sur le bâti (1) de la machine,
en ce que le dispositif de déplacement transversal (11, 12) est une transmission à courroie roulante dont l'arbre d'entraînement (12) est monté rotatif mais non déplaçable en translation dans deux paliers (14) fixés à la monture (18, 29), en ce que l'arbre (9) de la lame est monté mobile en rotation mais non déplaçable en translation dans ou sur un boîtier de palier relié rigidement au boîtier (11) de la transmission à couronne roulante,
et en ce qu'un dispositif (17) de transmission de force, solidaire en rotation, est interposé entre l'arbre (9) de la lame et l'arbre du moteur (16) qui ne peut pas être déplacé par le dispositif de déplacement transversal (11, 12), ce dispositif de transmission de force admettant les mouvements relatifs entre l'arbre (9) de la lame et l'arbre du moteur (16) qui se produisent pendant le fonctionnement et qui sont provoqués par le déplacement du dispositif de déplacement transversal (11, 12).

2. Dispositif de coupe selon la revendication 1,
caractérisé
en ce que le dispositif de déplacement transversal (11, 12) et le moteur (16) sont agencés sur la monture (18) qui est réalisée sous la forme d'un balancier pouvant osciller autour d'un axe horizontal (20).

3. Dispositif de coupe selon la revendication 2,
caractérisé
en ce que des coulisses d'inversion (13) pour la transmission à courroie roulante (11, 12) sont fixées sur le balancier (18) avec possibilité de réglage sur certaines positions pouvant être prédéterminées.

4. Dispositif de coupe selon la revendication 1,
caractérisé
en ce que l'arbre (9) de la lame, l'arbre articulé (17), réglable en longueur et l'arbre du moteur (16) sont contenus dans un plan commun.

5. Dispositif de coupe selon la revendication 1,
caractérisé
en ce que l'arbre (9) de la lame, son palier (10) et le dispositif de déplacement transversal (11, 12) sont agencés sur une monture constituée par un support commun (29) à l'aide de laquelle la lame (4) peut être éloignée de sa zone de coupe de la bande (3) à couper par un mouvement de translation, parallèlement à elle-même.

6. Dispositif de coupe selon la revendication 5,
caractérisé
en ce que le support (29) peut être éloigné de la zone de coupe de la bande (3) à couper par un mouvement de translation dans un plan, parallèlement à la lame (4) ou transversalement à l'arbre (9) de la lame.

7. Dispositif de coupe selon la revendication 5,
caractérisé
en ce que des coulisses d'inversion (13) pour la transmission à courroie roulante (11, 12) sont agencées sur le support (29) pour se placer dans certaines positions pouvant être prédéterminées.

8. Dispositif de coupe selon la revendication 5,
caractérisé par
des rails de guidage (30) fixés dans le bâti, servant à guider le support (29) mobile en translation.

9. Dispositif de coupe selon la revendication 5,
caractérisé
par des biellettes (31) disposées dans un parallélogramme, dont une extrémité est articulée sur le bâti (1) et l'autre extrémité sur le support (29).
